# EUROPÄISCHE PATENTSCHRIFT

(11) **EP 2 703 229 B1**
(45) Veröffentlichungstag und Bekanntmachung des Hinweises auf die Patenterteilung: **22.10.2014**
(21) Anmeldenummer: 12306023.8
(22) Anmeldetag: 27.08.2012
(51) Int. Cl.: B60R 16/03, B62D 25/20

(54) **Anordnung zur Stromversorgung von in einem Kraftfahrzeug angeordneten elektrischen Verbrauchern**
Assembly for supplying electricity to electricity consumers in a motor vehicle
Agencement destiné à l'alimentation en courant de consommateurs électriques agencés dans un véhicule automobile

(43) Veröffentlichungstag der Anmeldung: 05.03.2014
(73) Patentinhaber: Nexans, 75008 Paris (FR)
(72) Erfinder: Dr. Steinberg, Helmut, 92721 Störnstein (DE); Schröer, Frank, 92637 Weiden (DE)
(74) Vertreter: Döring, Roger

(56) Entgegenhaltungen:
- EP-A2- 0 949 138
- EP-B1- 0 178 196
- EP-B1- 1 390 233
- DE-A1- 10 052 643
- DE-A1-102005 058 610
- JP-A- 2006 290 227

## Beschreibung

Die Erfindung bezieht sich auf ein Kraftfahrzeug mit einer Anordnung zur Stromversorgung von in demselben angeordneten elektrischen Verbrauchern gemäß dem Oberbegriff des Patentanspruchs 1.

Eine solche in einem Kraftfahrzeug angebrachte Anordnung geht beispielsweise aus der JP 2006 290 227 A hervor.

Die Anordnung ist internationaler Stand der Technik und grundsätzlich in allen Kraftfahrzeugen - im folgenden kurz "Fahrzeug" genannt - vorhanden. Als Spannungsquelle ist mindestens eine Batterie im Fahrzeug angebracht, die insbesondere bei Elektrofahrzeugen auch wiederaufladbar sein kann. Im folgenden wird statt des Wortes "Spannungsquelle" das Wort "Batterie" verwendet.

In bekannter Technik sind die in einem Fahrzeug montierten elektrischen Leitungen in sogenannten Kabelbäumen bzw. Kabelsträngen jeweils zu einer Einheit zusammengefaßt. Bekannte Kabelbäume gehen beispielsweise aus den Druckschriften DE 37 10 642 A1, DE 36 09 704 A1 und DE 36 16 649 A1 hervor. Die elektrischen Verbraucher eines Fahrzeugs sind über die elektrischen Leitungen mit der Batterie desselben verbunden.

Die elektrischen Leiter eines Kabelbaums haben unterschiedliche Längen und in der Regel auch unterschiedliche Querschnitte. Wegen der meist großen Anzahl einzelner, zu einer Einheit zu verbindenden Leiter ist nicht nur die Herstellung eines Kabelbaums aufwendig, sondern auch seine Verlegung im Fahrzeug, wenn beispielsweise im Heckbereich befindliche Verbraucher mit der Batterie verbunden werden sollen.

Die eingangs erwähnte JP 2006 290 227 A beschreibt eine Anordnung, welche als relativ kurze Einheit im Bereich der Armaturen eines Fahrzeugs angeordnet ist und bis in den Zwischenraum zwischen dem Fahrersitz und dem Beifahrersitz hineinragt. Auf zwei mit einer Spannungsquelle verbundenen und am Boden des Fahrzeugs angebrachten, elektrisch leitenden Führungen ist ein Bauteil verschiebbar angeordnet. Es dient beispielsweise der Verbindung mit einem im Armaturenbereich angeordneten CD-Gerät oder einem DVD-Gerät. Das Bauteil kann mittels eines Hebels in einer vorgegebenen Position verriegelt werden.

Der Erfindung liegt die Aufgabe zugrunde, das eingangs geschilderte Fahrzeug so zu gestalten, daß die in einem Fahrzeug angeordneten Verbraucher auf einfachere Art und Weise mit der Batterie verbunden werden können.

Diese Aufgabe wird entsprechend den kennzeichnenden Merkmalen des Patentanspruchs 1 gelöst.

Bei dem Fahrzeug mit dieser Anordnung sind zwei Tragelemente eingesetzt, die einerseits als mechanisch stabile Träger für die Aufbauten des Fahrzeugs und andererseits als eine Art Stromschienen zum elektrisch leitenden Anschluß der Verbraucher an die Batterie desselben dienen. Die Tragelemente haben auf ihrer ganzen Länge Kontaktstellen, an welche zu den Verbrauchern führende einzelne Leiter oder auch zwei oder mehr vorher zusammengefaßte Leiter mit einer relativ kurzen Länge angeschlossen werden können, die im wesentlichen nur vom Abstand der Verbraucher von einer der Kontaktstellen bzw. von zwei komplementären Kontaktstellen der Tragelemente bestimmt ist. Die Position der Batterie innerhalb des Fahrzeugs ist dabei nicht von Bedeutung. Da die Tragelemente sich über die ganze Länge des Fahrzeugs erstrecken, ergeben sich insbesondere im Heckbereich desselben wesentliche Vereinfachungen, weil auch die dortigen Verbraucher über relativ kurze Leitungen an die Kontaktstellen der Tragelemente angeschlossen werden können. Dieser Vorteil ist insbesondere dann von Bedeutung, wenn die Batterie des Fahrzeugs im Motorraum desselben angebracht ist, also weit entfernt vom Heckbereich.

Ein Ausführungsbeispiel des Erfindungsgegenstandes ist in den Zeichnungen dargestellt.

Es zeigen:
Fig. 1 in schematischer Darstellung eine Seitenansicht eines Fahrzeugs.
Fig. 2 ebenfalls in schematischer Darstellung eine Anordnung nach der Erfindung.

Die in der Anordnung nach der Erfindung verwendeten Tragelemente haben eine Doppelfunktion. Sie sind einerseits mechanisch stabiler Träger für die Aufbauten des Fahrzeugs und andererseits elektrischer Leiter in Form von "Stromschienen" zum elektrisch leitenden Anschluß der Verbraucher. Die Tragelemente müssen auf der einen Seite also mechanisch ausreichend fest sein und auf der anderen Seite eine ausreichende elektrische Leitfähigkeit und einen ausreichend großen Querschnitt zur Übertragung eines für alle anschließbaren Verbraucher ausreichenden Stroms haben. Dabei ist es möglich, die Tragelemente als "Stromschienen" für Hochstrom auszulegen und die Verbraucher entsprechend ihrem Spannungsbedarf gegebenenfalls über Wandler an dieselben anzuschließen. In diesem Sinne können die Tragelemente beispielsweise aus Aluminium bzw. einer Aluminiumlegierung, aus Kupfer bzw. einer Kupferlegierung oder aus Stahl bestehen. Aus Gewichtsgründen kann mit Vorteil Aluminium bzw. eine Aluminiumlegierung, insbesondere mit Magnesium als Legierungselement, für die Tragelemente eingesetzt werden.

Die Tragelemente sind rundum und über ihre ganze Länge von einer Isolierung umgeben, durch welche sie gegenüber den Aufbauten des Fahrzeugs berührungssicher abgedeckt sind. Geeignete Isoliermaterialien sind beispielsweise Polyethylen, Polyurethan, Polyamid, Polypropylen und Keramik.

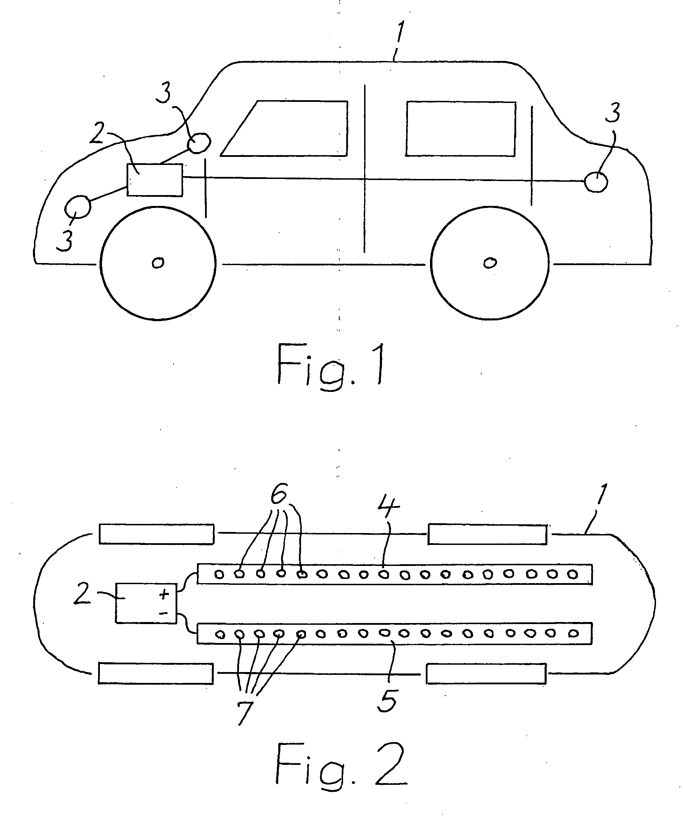

Das in Fig. 1 schematisch dargestellte Fahrzeug 1 soll ein PKW sein. Es hat im dargestellten Ausführungsbeispiel eine im Motorraum angeordnete Batterie 2 und eine Vielzahl von elektrischen Verbrauchern 3, von denen nur drei an unterschiedlichen Positionen im Fahrzeug 1 befindliche als Kreise eingezeichnet sind. Alle Verbraucher 3 sind über isolierte Leiter elektrisch leitend mit der Batterie 2 verbunden. Das Fahrzeug 1 kann auch eine andere Form als ein PKW haben und es kann auch weniger als vier Räder aufweisen. Es kann beispielsweise auch ein Transporter oder ein Bus sein.

In Fig. 2 ist nur der Bodenbereich des Fahrzeugs 1 schematisch dargestellt. Jedwede Aufbauten sind der Übersichtlichkeit halber fortgelassen. In diesem Bodenbereich sind im dargestellten Ausführungsbeispiel zwei Tragelemente 4 und 5 angebracht, die sich im wesentlichen über die ganze Länge des Fahrzeugs 1 erstrecken. Es können grundsätzlich auch mehr als zwei Tragelemente im Fahrzeug 1 angeordnet werden, die gegebenenfalls in geeigneter Weise elektrisch miteinander verbunden sind. Jedes Tragelement 4 bzw. 5 ist mit einem Ende mit einem der Pole der Batterie 2 verbunden.

Die Batterie 2 ist im dargestellten Ausführungsbeispiel im Bereich eines Endes des Fahrzeugs 1 angeordnet. Die Tragelemente 4 und 5 können entsprechend der zeichnerischen Darstellung jeweils einstückig ausgebildet sein. Wenn die Batterie 2 beispielsweise im mittleren Bereich des Fahrzeugs 1 angebracht ist, können die Tragelemente 4 und 5 auch jeweils aus zwei Teilen bestehen, die sich auf unterschiedlichen Seiten der Batterie 2 jeweils bis zu einem Endbereich des Fahrzeugs 1 erstrecken. Die Tragelemente 4 und 5 bestehen entsprechend den vorangehenden Ausführungen aus mechanisch stabilem und elektrisch leitfähigem Material.

Die Tragelemente 4 und 5 sind auf ihrer ganzen Länge mit voneinander getrennten Kontaktstellen 6 bzw. 7 bestückt, an welche die zu den Verbrauchern 3 führenden elektrischen Leiter direkt oder indirekt angeschlossen werden können. Die Kontaktstellen 6 und 7 können als in der elektrischen Verbindungstechnik übliche Kontaktstellen ausgeführt sein. Es kann sich dementsprechend beispielsweise um Bauteile für eine Steckverbindung, eine Schraubverbindung oder eine Schweiß- bzw. Lötverbindung handeln. An den Enden der anzuschließenden Leiter sind jeweils Bauteile angebracht, die auf einfache Weise mit den an den Kontaktstellen 6 und 7 der Tragelemente 4 und 5 angebrachten Bauteilen verbunden werden können.

Die zu den Verbrauchern 3 führenden Leiter können direkt einzeln an zwei komplementäre Kontaktstellen 6 und 7 der unterschiedliche Polaritäten aufweisenden Tragelemente 4 und 5 angeschlossen werden. Es ist auch möglich, zwei oder mehr Leiter zusammenzufassen und gemeinsam direkt an zwei komplementäre Kontaktstellen 6 und 7 anzuschließen. Das bietet sich insbesondere für den Anschluß der im Heckbereich oder im Motorraum des Fahrzeugs 1 befindlichen größeren Anzahl von Verbrauchern 3 an.

Ein indirekter Anschluß der Leiter an die Kontaktstelen 6 und 7 ist dann gegeben, wenn beispielsweise Wandler oder andere elektrische bzw. elektronische Geräte zwischengeschaltet werden müssen, die ihrerseits direkt mit den entsprechenden Kontaktstellen 6 und 7 verbunden werden. Die Leiter werden dann an solche Geräte angeschlossen. Die Anordnung kann in diesem Sinne auch für Mehrspannungsbordnetze ausgelegt sein, wie beispielsweise 12 V, 24 V oder 48 V aber auch 600 V. Dabei können die unterschiedlichen Spannungen bei entsprechenden Verbindungen mit der Batterie 2 auch auf unterschiedlichen Tragelementen (Stromschienen) abgegriffen werden.

## Patentansprüche

1. Kraftfahrzeug mit einer Anordnung zur Stromversorgung von in demselben angeordneten elektrischen Verbrauchern, in welchem mindestens eine elektrische Spannungsquelle (2) angebracht ist, mit welcher die Verbraucher (3) elektrisch leitend verbunden sind, und bei welchem im Bodenbereich elektrisch leitende Führungen angeordnet sind, die an ihrem einen Ende jeweils mit einem der Pole der Spannungsquelle (2) elektrisch leitend verbunden sind, **dadurch gekennzeichnet,**
- **daß** die Führungen in Doppelfunktion einerseits elektrische Leiter und andererseits Tragelemente (4,5) sind, die sich in der Funktion als mechanisch stabile Träger für die Aufbauten des Kraftfahrzeugs (1) im Wesentlichen über die ganze Länge desselben erstrecken, und
- **daß** die beiden Tragelemente (4,5) in der Funktion als elektrische Leiter auf ihrer ganzen Länge voneinander getrennte Kontaktstellen (6,7) zum Anschluß der Verbraucher (3) des Kraftfahrzeugs (1) aufweisen.

2. Kraftfahrzeug nach Anspruch 1, **dadurch gekennzeichnet, daß** die Tragelemente (4,5) aus Aluminium bzw. einer Aluminiumlegierung bestehen.

3. Kraftfahrzeug nach Anspruch 1, **dadurch gekennzeichnet, daß** die Tragelemente (4,5) aus Kupfer bzw. einer Kupferlegierung bestehen.

4. Kraftfahrzeug nach Anspruch 1, **dadurch gekennzeichnet, daß** die Tragelemente (4,5) aus Stahl bestehen.

## Claims

1. A motor car with an arrangement for the current supply of electrical loads, which are arranged in the same, in which motor car at least one electrical voltage source (2) is mounted to which the loads (3) are electrically conductively connected, and in which electrically conductive guide members are arranged in the bottom of the motor car, which are electrically conductively connected to one of the poles of the voltage source (2) at their one end, **characterized in**
- **that** the guide members are, in carrying out a double function, electrical conductors on the one hand and support members (4,5) on the other hand, which in the function as mechanically stable support for the superstructural parts extend in the motor car essentially over the entire length of the same, and
- **that** the two support elements (4,5) in their function as electrical conductors, have over their entire length contact points (6,7) which are separated from each other for electrically conductively connecting the loads (3) of the motor car (1).

2. Arrangement according to claim 1, **characterized in that** the support elements (4, 5) consist of aluminium or an aluminium alloy.

3. Arrangement according to claim 1, **characterized in that** the support elements (4, 5) consist of copper or a copper alloy.

4. Arrangement according to claim 1, **characterized in that** the support elements (4, 5) consist of steel.

## Revendications

1. Véhicule automobile comprenant un agencement d'alimentation en courant de consommateurs électriques disposés dans celui-ci, dans lequel au moins une source de tension électrique (2) est prévue, avec laquelle les consommateurs (3) sont connectés de manière électriquement conductrice et dans lequel, dans la région du fond, sont disposés des guides électriquement conducteurs qui sont connectés au niveau de l'une de leurs extrémités de manière électriquement conductrice à chaque fois à l'un des pôles de la source de tension (2), **caractérisé en ce**
- **que** les guides ont une double fonction, à la fois de conducteurs électriques et d'éléments de support (4, 5), qui, dans leur fonction en tant que supports mécaniquement stables pour les éléments structurels du véhicule automobile (1), s'étendent essentiellement sur toute la longueur de celui-ci, et
- **que** les deux éléments de support (4, 5), dans leur fonction en tant que conducteurs électriques, présentent des points de contact (6, 7) séparés les uns des autres sur toute leur longueur pour le raccordement des consommateurs (3) du véhicule automobile (1).

2. Véhicule automobile selon la revendication 1, **caractérisé en ce que** les éléments de support (4, 5) se composent d'aluminium ou d'un alliage d'aluminium.

3. Véhicule automobile selon la revendication 1, **caractérisé en ce que** les éléments de support (4, 5) se composent de cuivre ou d'un alliage de cuivre.

4. Véhicule automobile selon la revendication 1, **caractérisé en ce que** les éléments de support (4, 5) se composent d'acier.
